# EUROPEAN PATENT APPLICATION

(11) **EP 3 783 285 A1**
(43) Date of publication of application: **24.02.2021**
(21) Application number: 19806409.9
(22) Date of filing: 23.05.2019
(51) Int. Cl.: F25D 23/02, F16J 15/10

(54) **SEALING STRUCTURE FOR COOLING DEVICE AND COOLING DEVICE**

(30) Priority: 25.05.2018 JP 2018100874
(71) Applicant: PHC Holdings Corporation, Tokyo 105-8433 (JP)
(72) Inventor: OKADA, Tadashi, Toon-shi, Ehime 791-0395 (JP)
(74) Representative: Grünecker Patent- und Rechtsanwälte PartG mbB
(86) International application number: PCT/JP2019/020416
(87) International publication number: WO 2019/225690

(57) **Abstract**

The present invention is provided with: a housing having an inner space that is open in a first direction; a door that enters the inner space of the housing from the first direction side; and a seal member that is brought into a compression state between the door and an inner space-facing inner peripheral surface of the housing in a state in which the door has entered the inner space.

## Description

### Technical Field

The present invention relates to a sealing structure of a cooling apparatus that seals the interior with a door, and a cooling apparatus using the same.

### Background Art

For cooling apparatuses such as ultra-low-temperature freezers, various sealing structures for ensuring sealing of the interior in a state where the opening of the housing is closed with the door have been proposed (e.g., PTL 1). By sealing the interior, leakage of cold air in the interior to the outside and inflow of the external warm air into the interior can be suppressed and a low temperature in the interior can be maintained.

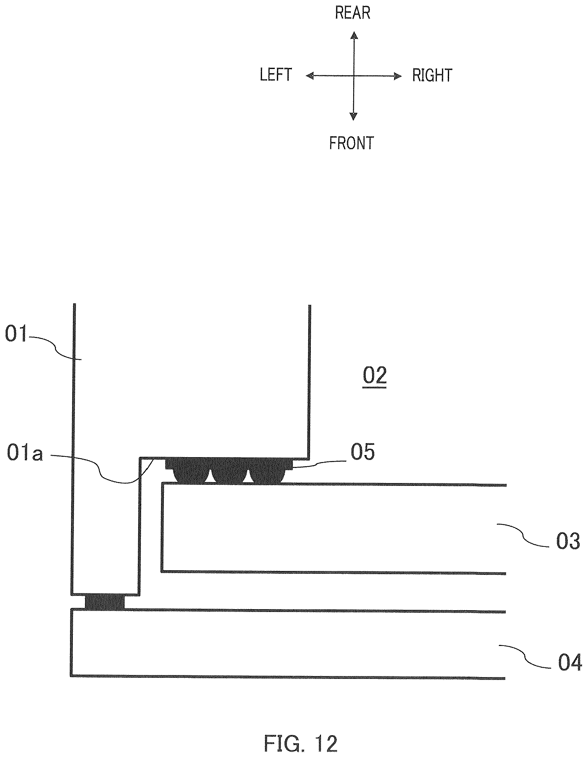

A commonly known example of such a sealing structure is described below with reference to FIG. 12. FIG. 12 is a sectional view of a main part of a sealing structure part of an ultra-low-temperature freezer taken along the horizontal direction. Note that in FIG. 12, hatching on cross sections is omitted.

In the following description, the side (the side on which the outer door and the inner door are provided) facing the user using it is the front side and the side opposite to the front side is the rear side. In addition, left and right are defined with respect to the viewing direction from the front to the rear, and the right direction and the left direction are collectively referred to as a width direction.

As illustrated in FIG. 12, the ultra-low-temperature freezer has a dual structure for closing interior 02 that is the inner space of housing 01. Specifically, inner door 03 that closes the interior 02 and outer door 04 that further closes the interior 02 from the outer side of inner door 03 are provided. FIG. 12 illustrates a state where the interior 02 is closed with both inner door 03 and outer door 04.

The sealing structure related to inner door 03 is particularly described. Packing 05 is provided as a sealing member over the whole circumference at peripheral portion 01a of housing 01 that faces inner door 03 at a position on the outer periphery side of the entrance (opening) of the interior 02. In the state illustrated in FIG. 12 where inner door 03 is closed, packing 05 is pressed by inner door 03 from the front side and compressed. As a result, packing 05 deforms to make intimate contact with inner door 03, and the sealing property of the interior 02 improves.

Note that housing 01 is provided with a mechanism (not illustrated) for maintaining the closed state of inner door 03.

### Citation List

### Patent Literature

PTL 1
WO2017/154733

### Summary of Invention

### Technical Problem

A sealing structure such as that illustrated in FIG. 12 has the following problems.
(1) As the compression amount (crushing amount) of packing 05 is increased by pushing inner door 03 with a greater strength, the adhesion with inner door 03 is increased and the sealing property of the interior 02 is improved. At the same time, however, as the compression amount is increased, the resilience of packing 05 is increased and the compressing force on packing 05 is increased, and therefore, the improvement in the sealing property with the increased compression amount is limited.
(2) The sealing property of the interior 02 can be improved also by increasing the sealing area, i.e., the contact area between packing 05 and inner door 03. In such a case, peripheral portion 01a of housing 01 as the attachment surface of packing 05 has to be enlarged, thus leading to increase of the product size or reduction of the volumetric capacity of the interior. Therefore, the improvement of the sealing property of the interior 02 by enlarging the sealing area is practically difficult.
(3) Packing 05 is compressed when inner door 03 is swung in the closing direction (rearward), the pressing force that acts on packing 05, and in turn, the compression amount, tend to vary depending on the distance from the rotation center of inner door 03. For this reason, it is difficult to uniformly compress packing 05 over the whole circumference, and consequently the adhesion between packing 05 and inner door 03 is lower at a portion where the compression amount of packing 05 is small. Specifically, at peripheral portion 01a of housing 01, portions where the sealing property, and in turn, the heat insulating property, are low are partially formed.

To solve the above-mentioned problems, an object of the present invention is to provide a sealing structure of a cooling apparatus and a cooling apparatus that can improve the heat insulating property.

### Solution to Problem

To achieve the above-mentioned object, a sealing structure of a cooling apparatus of the present invention includes a housing including an inner space that is open to a first direction; a door configured to enter the inner space of the housing from a side of the first direction with respect to the housing; and a sealing member configured to be brought into a compression state between the door and an inner peripheral surface of the housing in a state where the door is located in the inner space, the inner peripheral surface facing the inner space.

To achieve the above-mentioned object, a cooling apparatus of the present invention includes the sealing structure of the cooling apparatus.

### Advantageous Effects of Invention

According to the present invention, the sealing property, and in turn, the cooling performance, of the inner space with the door in the cooling apparatus can be improved.

### Brief Description of Drawings

FIG. 1 is a perspective view illustrating a general configuration of an ultra-low-temperature freezer of an embodiment of the present invention in the state where an outer door is open and an inner door is closed;
FIG. 2 is a perspective view illustrating a general configuration of an ultra-low-temperature freezer of an embodiment of the present invention in the state where both the outer door and the inner door are open;
FIG. 3 is a horizontal cross-sectional view of a front left end portion of the ultra-low-temperature freezer taken along line A-A of FIG. 1 as viewed from above;
FIG. 4 is a lateral cross-sectional view illustrating a configuration of a packing of the embodiment of the present invention;
FIG. 5 is a schematic view for describing a sealing structure of the embodiment of the present invention, and corresponds to the horizontal cross-sectional view the ultra-low-temperature freezer taken along line B-B of FIG. 1 as viewed from above;
FIG. 6 is a schematic view for describing the sealing structure of the embodiment of the present invention, and corresponds to FIG. 3;
FIG. 7 is a schematic view for describing advantageous effects of the embodiment of the present invention, and corresponds to FIG. 3;
FIG. 8A is a schematic view illustrating a configuration of a modification of the packing of the present invention, and corresponds to FIG. 3;
FIG. 8B is a schematic view illustrating a configuration of a modification of the packing of the present invention, and corresponds to FIG. 3;
FIG. 9 is a schematic view for describing Modification 1 of the sealing structure according to the present invention, and corresponds to FIG. 7;
FIG. 10 is a schematic view for describing Modification 2 of the sealing structure according to the present invention, and corresponds to FIG. 7;
FIG. 11 is a schematic view for describing Modification 3 of the sealing structure according to the present invention, and corresponds to FIG. 7; and
FIG. 12 is a diagram for describing a known example of a sealing structure, and is a sectional view of a main part of a sealing structure part of an ultra-low-temperature freezer taken along a horizontal direction.

### Description of Embodiments

An embodiment of the present invention is described below with reference to the drawings. The following embodiments are only examples and do not exclude the application of various variations and techniques not expressly described in the following embodiments. Also, each of the configurations of the embodiments may be variously modified to the extent that they do not deviate from the gist of the embodiments. Furthermore, each of the configurations of the embodiments may be selected, omitted or combined as necessary.

In the following description, an example in which a cooling apparatus is an ultra-low-temperature freezer is described. Note that a cooling apparatus is a concept including a freezing apparatus, a refrigerating apparatus, an ultra-low-temperature freezer, and apparatuses having a combination of their functions. In addition, an ultra-low-temperature freezer refers to an apparatus that cools the interior to an ultra-low-temperature (e.g., approximately -80°C).

In addition, in the ultra-low-temperature freezer, the side facing the user (the side on which the outer door and the inner door described later are provided) is the front side, and the side opposite to the front side is the rear side. In addition, left and right are defined with respect to the viewing direction from the front to the rear, and the right direction and the left direction are collectively referred to as a width direction. In addition, also in the components of the ultra-low-temperature freezer, the front, rear left and right are defined with respect to a state where they are assembled in the ultra-low-temperature freezer, but the front and rear of the outer door and the inner door described later are defined with respect to a closed state.

In addition, in each diagram for describing the embodiment, the same components are basically denoted with the same reference numerals, and the description thereof may be omitted.

### 1. General Configuration of Ultra-low-temperature Freezer

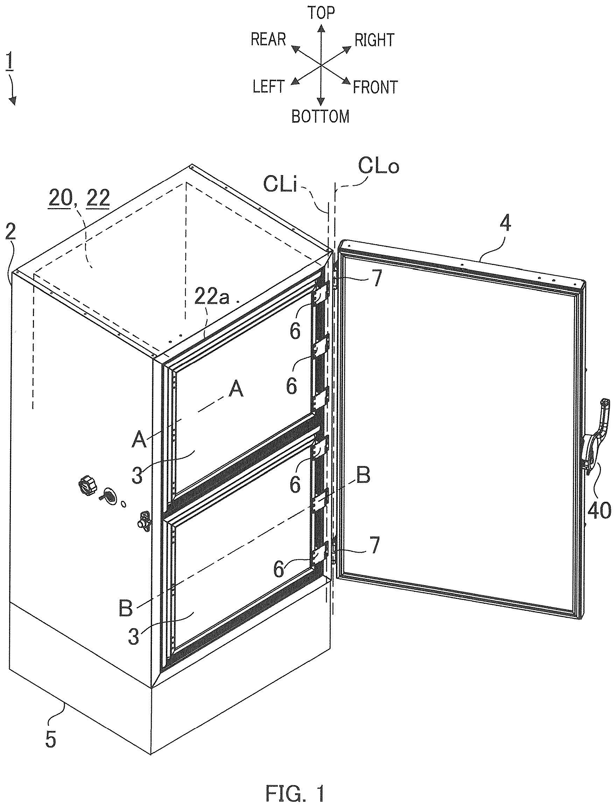

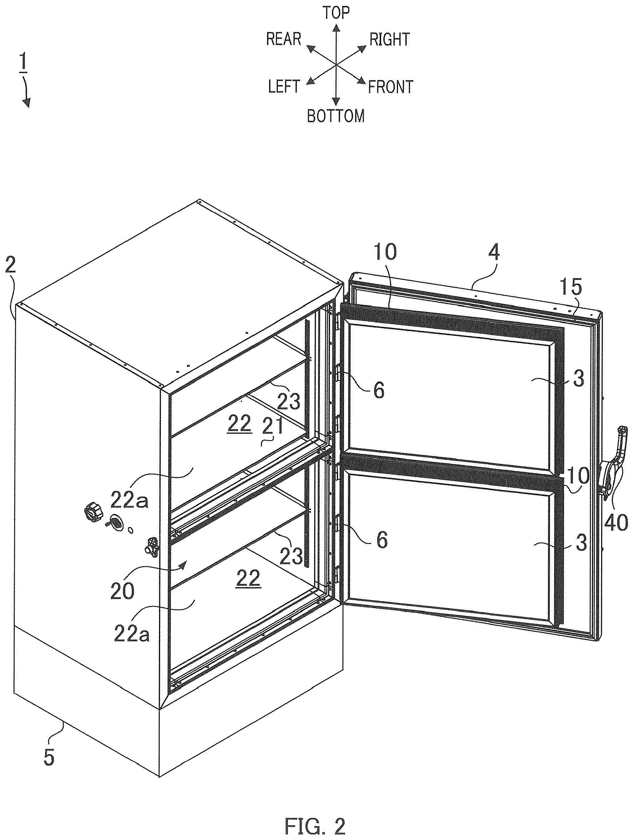

A general configuration of ultra-low-temperature freezer 1 is described below with reference to FIGS. 1 and 2. FIG. 1 is a perspective view illustrating a general configuration of the ultra-low-temperature freezer of the embodiment of the present invention in the state where an outer door is open and an inner door is closed. FIG. 2 is a perspective view illustrating a general configuration of the ultra-low-temperature freezer of the embodiment of the present invention in the state where both the outer door and the inner door are open.

Ultra-low-temperature freezer 1 includes housing 2, inner door 3, outer door 4 and machine chamber 5 as illustrated in FIGS. 1 and 2.

Housing 2 includes inner space 20 that opens to the front side (first direction). Inner space 20 is a space in which to house a storing object.

With partition wall 21, inner space 20 is divided into two inner spaces 22 arranged in the up-and-down direction. In the following description, a surface facing inner space 22 in housing 2 is referred to as an inner peripheral surface. Note that with partition wall 23, each inner space 22 is further divided into two sections in the up-and-down direction.

Inner door 3 is provided for each inner space 22, and is provided in two stages on the upper and lower sides. A right end (first end portion) of the front surface of each inner door 3 is fixed at the right end of the front surface of housing 2 with a plurality of hinges 6 arranged in the up-and-down direction. Outer door 4 is fixed at the right end of the front surface of housing 2 on the outside (i.e., the right side) of inner door 3 with a plurality of hinges 7 provided in the up-and-down direction.

With this configuration, a entrance of inner space 22, i.e., opening 22a of housing 2 is opened and closed in a double manner with inner door 3 and outer door 4. More specifically, inner door 3 is horizontally swingable about rotation center line CLi extending in the up-and-down direction with a left end (second end portion) of inner door 3 as a swing end, and opens and closes the entrance of inner space 22, i.e., opening 22a of housing 2 through the user operation. Outer door 4 is horizontally swingable about center line CLo extending in the up-and-down direction on the outside (i.e., the right side) of rotation center line CLi of inner door 3, and opens and closes opening 22a from the outside (i.e., the front side) of inner door 3.

A heat insulation material is provided in each of housing 2, inner door 3 and outer door 4 such that inner space 22 is maintained at a low temperature.

Further, packing 10 (sealing member) is provided at the outer periphery (the top surface, the right side surface, the bottom surface and the left side surface) of inner door 3 over the whole circumference. Likewise, packing 15 is provided at the outer periphery (the top surface, the right side surface, the bottom surface and the left side surface) of outer door 4 over the whole circumference. With packings 10 and 15, adhesion between inner door 3 and housing 2 and adhesion between outer door 4 and housing 2 when inner door 3 and outer door 4 are closed are improved, and the sealing property of inner space 22 is improved.

In addition, outer door 4 is provided with handle 40 configured to be grabbed by the user for opening and closing. Handle 40 in the present embodiment includes a lock mechanism. The lock mechanism is configured to lock closed outer door 4, and to release the locked state to open outer door 4. When outer door 4 is locked with the lock mechanism, the airtightness and the heat insulating property of ultra-low-temperature freezer 1 can be increased.

Machine chamber 5 in the present embodiment is provided in a lower portion of housing 2 to house a main part of a freezing cycle therein.

### 2. Sealing Structure

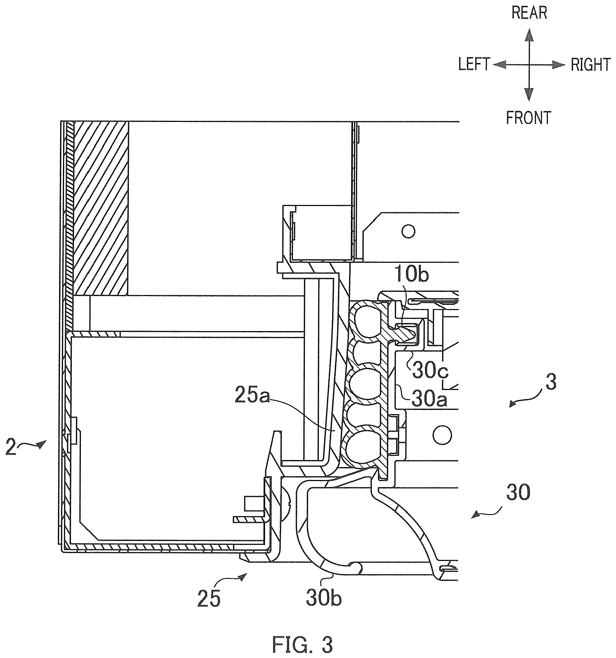

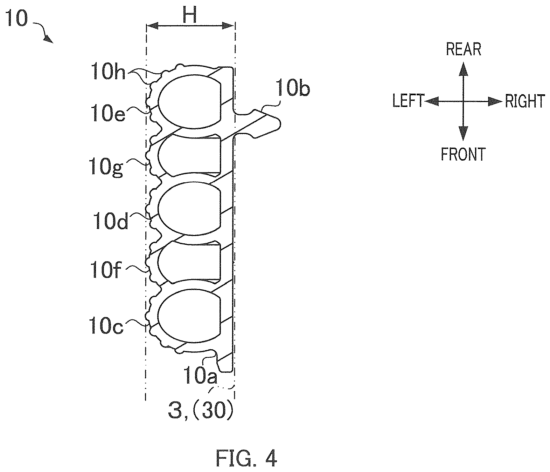

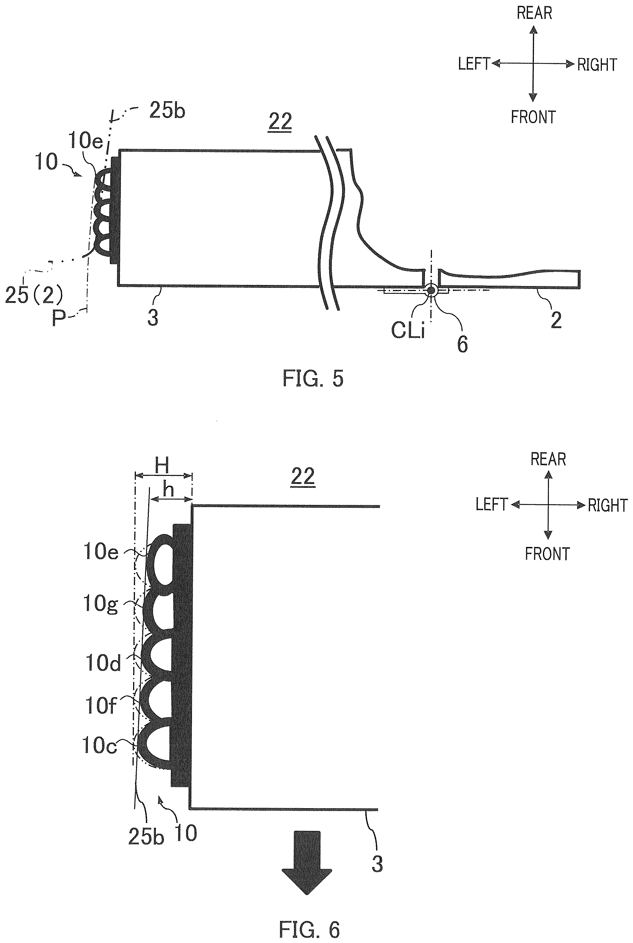

A sealing structure according to the embodiment of the present invention is described below with reference to FIGS. 3 to 6. FIG. 3 is a horizontal cross-sectional view of a front left end portion of ultra-low-temperature freezer 1 taken along line A-A of FIG. 1 as viewed from above. FIG. 4 is a lateral cross-sectional view illustrating a configuration of the packing according to the embodiment of the present invention. FIG. 5 is a schematic view for describing the sealing structure of the embodiment of the present invention, and corresponds to the horizontal cross-sectional view of the ultra-low-temperature freezer taken along line B-B of FIG. 1 as viewed from above. FIG. 6 is a schematic view for describing the sealing structure of the embodiment of the present invention, and corresponds to FIG. 3. Note that in the present embodiment, the sealing structure is applied to the inner door.

The outer peripheral surface of inner door 3 is composed of door breaker 30 made of resin over the whole circumference. Rear part 30a (hereinafter referred to also as "breaker rear part 30a") of door breaker 30 is generally configured to extend in the front-rear direction such that the position in the width direction is fixed, in the state illustrated in FIG. 3 where inner door 3 is closed. Note that the front part of door breaker 30 is grip 30b to be operated by the user to open and close inner door 3 by hand, and has a curved shape for the sake of operability. At the time when inner door 3 is closed, grip 30b makes contact with housing breaker 25 described later and thus functions also as a stopper for stopping inner door 3.

Packing 10 is attached on the outer peripheral surface of door breaker 30 over the whole circumference. Attaching recess 30c recessed inward in the width direction is provided in rear part 30a of door breaker 30. Attaching protrusion 10b of packing 10 is inserted to recess 30c from the outer side in the width direction. In this manner, packing 10 is fixed to the outer peripheral surface of inner door 3. Note that door breaker 30 is omitted in FIGS. 5 to 7.

A entrance of the inner peripheral surface of housing 2 is composed of housing breaker 25 made of resin over the whole circumference. Specifically, housing 2 is provided with housing breaker 25 surrounding opening 22a (see FIG. 2).

Rear part 25a of housing breaker 25 functions as a compression surface configured to compress packing 10 in the state where inner door 3 is closed. Breaker rear part 25a is formed as a tilted surface that is tilted inward in the width direction (toward the center side in inner space 22 in the upper, lower, left and right directions) as it goes toward the rear side (in the second direction). As such, rear part 25a is hereafter referred to as "breaker tilted surface part 25b".

Packing 10 is described below with reference to FIG. 4. Packing 10 extends in the depth direction of FIG. 4, and constantly has the lateral cross-sectional shape illustrated in FIG. 4. Packing 10 includes base part 10a, protrusion 10b, air layer formation parts 10c, 10d and 10e (sliding contact parts), and connecting parts 10f and 10g. Air layer formation parts 10c to 10e (sliding contact parts) and connecting parts 10f and 10g (sliding contact parts) are disposed side by side in the front-rear direction, and make sliding contact with breaker tilted surface part 25b at the time when inner door 3 is closed. In addition, the height of the end (width) of each of air layer formation parts 10c to 10e and connecting parts 10f and 10g is dimension H.

Typically, packing 10 is produced by extrusion with an elastic material such as rubber and resin.

Protrusion 10b protrudes in the width direction from base part 10a. As described above, by inserting protrusion 10b to recess 30c of breaker rear part 30a of inner door 3, packing 10 is attached to inner door 3.

Each of air layer formation parts 10c to 10e has an elliptic cylindrical shape, and the front end and the rear end thereof are fixed to base part 10a. In addition, each of air layer formation parts 10c to 10e protrudes outward in the width direction from base part 10a.

Connecting part 10f is disposed to bridge the part between the outer peripheral surfaces of air layer formation parts 10c and 10d, and connecting part 10g is disposed to bridge the part between the outer peripheral surfaces of air layer formation parts 10d and 10e. An air layer is formed between connecting part 10f, air layer formation parts 10c and 10d and base part 10a. Likewise, an air layer is formed between connecting part 10g, air layer formation parts 10d and 10e and base part 10a.

In addition, a plurality of ribs 10h is provided in the outer peripheral surface of each of air layer formation parts 10c to 10e and connecting parts 10f and 10g. Note that rib 10h is illustrated only in FIG. 4, and is omitted in FIGS. 3 and 5 to 7.

Here, breaker tilted surface part 25b that compresses packing 10 is described below with reference to FIG. 5 with an example of a left side inner surface of housing 2 and the left side surface of inner door 3. Note that in FIG. 5, for convenience of description, breaker tilted surface part 25b is illustrated by a chain double-dashed line and packing 10 is illustrated in a non-compressed natural state.

To ensure the sealing property of inner door 3, packing 10 attached on the peripheral surface of inner door 3 should be in intimate contact with breaker tilted surface part 25b that is included in the inner peripheral surface of housing 2 when inner door 3 is in the closed state illustrated in FIG. 5. Therefore, it is necessary that, in the closed state, inner door 3 enters inner space 22 and the peripheral surface thereof faces breaker tilted surface part 25b with packing 10 therebetween. For this reason, hinge 6 is attached to the front surface of housing 2 and the front surface of inner door 3 such that rotation center CLi of inner door 3 defined by hinge 6 is located at the front surface of housing 2. With this configuration, in the state where inner door 3 is closed, the front surface of inner door 3 and the front surface of housing 2 are flush with each other, and the rear surface of inner door 3 is located on the rear side relative to the front surface of housing 2. That is, in the state where inner door 3 is closed, the peripheral surface of inner door 3 faces breaker tilted surface part 25b with packing 10 therebetween.

At the time when inner door 3 is closed, packing 10 rotates integrally with inner door 3 about rotation center CLi set at the right end of the front surface of housing 2. Accordingly, packing 10 provided at the left side surface serving as the swing end of inner door 3 is located at an outermost position in the width direction at the time when it passes through the front surface of housing 2. Then, as packing 10 is rotated rearward (i.e., as it enters inner space 22) after passing through the front surface of housing 2, packing 10 goes inward (i.e., rightward) in the width direction. That is, along with the opening and closing of the inner door, the position of packing 10 in the width direction changes. In the following description, this is referred to as "positional shift along with the opening and closing of inner door 3". For example, at the time when inner door 3 is closed, the rearmost air layer formation part 10e of packing 10 moves on path P illustrated by the dashed line.

To deal with the positional shift along with the opening and closing of inner door 3, breaker tilted surface part 25b is formed as a tilted surface that is tilted toward the center side (the center side of the inner space) in the width direction as it goes toward the rear side.

That is, in breaker tilted surface part 25b, an entrance of breaker tilted surface part 25b is located at the outermost side in the width direction, and therefore breaker tilted surface part 25b does not make contact with, or only slightly makes contact with, packing 10 that is located relatively outside in the width direction when it passes through the entrance of breaker tilted surface part 25b. Thus, the user can easily push packing 10 and inner door 3 further rearward.

In addition, breaker tilted surface part 25b is tilted inward in the width direction as it goes toward the rear side, and therefore, when inner door 3 is completely closed, packing 10 that is located on the inner side in the width direction than when it passes through the entrance of breaker tilted surface part 25b, especially the rearmost air layer formation part 10e, can also be compressed.

In addition, as illustrated in FIG. 6, the height of the end of each of air layer formation parts 10c to 10e and connecting parts 10f and 10g of packing 10 of the natural state illustrated by the chain double-dashed line is the same height H, whereas gap h between inner door 3 and breaker tilted surface part 25b decreases in the rearward direction. Thus, air layer formation parts 10c to 10e and connecting parts 10f and 10g located in gap h are compressed such that the closer they are to the rear side, the stronger the compression.

At the time when inner door 3 is opened as illustrated by the black arrow from the state illustrated in FIG. 6, the following problems may possibly occur. Specifically, (1) in air layer formation parts 10c to 10e and connecting parts 10f and 10g, the closer the part is to the rear side, i.e., the greater the amount of compression, the greater the force to reset to the natural state. (2) Further, as inner door 3 is opened and moved forward as illustrated by the black arrow, the position of packing 10 moves outward in the width direction.

Such phenomena (1) and (2) may occur at the same time, and, at the time when inner door 3 is opened, especially the air layer formation parts and the connecting parts on the rear side in packing 10 may be caught by breaker tilted surface part 25b (the inner peripheral surface of housing 2), and consequently, inner door 3 may not be smoothly opened. In practice, however, as the air layer formation parts and the connecting parts of packing 10 are closer to the rear side, the more they are cooled and hardened by low temperature inner space 22 such that they do not reset to the natural state or have a smaller resetting force. Thus, packing 10 is not caught by the inner peripheral surface of housing 2 at the time when inner door 3 is opened, and the user can easily manually open inner door 3.

Note that while the "positional shift along with the opening and closing of inner door 3" is caused only at the left peripheral surface on the swing side in the inner peripheral surface of inner door 3, the above-mentioned situation described with reference to FIG. 6 is caused at the entire inner peripheral surface of inner door 3. In view of this, the whole circumference of breaker tilted surface part 25b that forms the inner peripheral surface of inner door 3 is provided as a tilted surface that is tilted toward the center of inner space 22 as it goes toward the rear side as described above.

In addition, if only "positional shift along with the opening and closing of inner door 3" is taken into consideration, it is conceivable to adopt a configuration in which the inner peripheral surface of housing 2 (the inner peripheral surface of breaker 25) extends straight in the front-rear direction, and the height H of air layer formation parts 10c to 10e and connecting parts 10f and 10g of packing 10 increases in the direction toward the rear side. However, with such a configuration, inner door 3 may not be opened. Specifically, at the time when inner door 3 is opened, packing 10 on the swing side of inner door 3 moves forward while moving outward in the width direction, i.e., toward the inner peripheral surface of housing 2, along with the swing of inner door 3. However, since the position of the inner peripheral surface of housing 2 in the width direction is fixed in the front-rear direction, such movements are not allowed when packing 10 is cooled and hardened by inner space 22 at a low temperature.

Note that in the state where outer door 4 is closed, each inner door 3 is set to a closed state by being pushed by outer door 4 to inner space 22.

### 3. Advantageous Effects

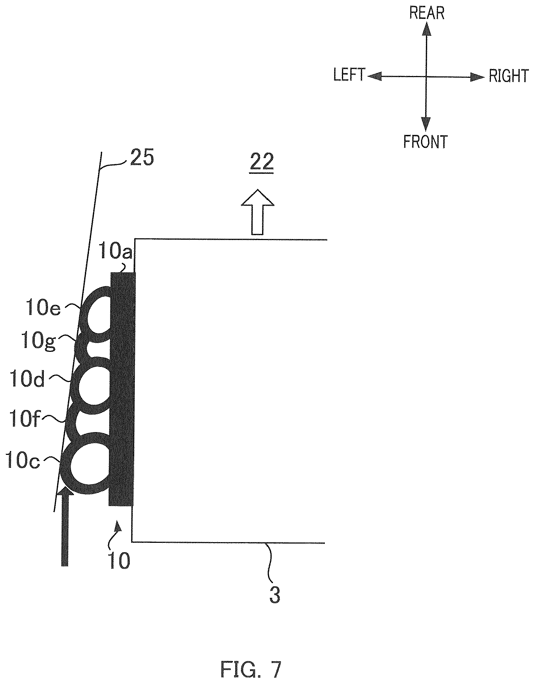

According to the embodiment of the present invention, the following advantageous effects are obtained.
(1) In a known configuration, the user pushes the inner door to the housing so as to compress the packing. As such, when the number of packings is increased to increase the sealing area, the force of the packing that pushes back the inner door at the time when the inner door is closed is increased, and consequently the force required for closing the inner door is increased. As such, in the known configuration, improvement in sealing performance by the increased number of packings is limited.
   In contrast, in the present embodiment, packing 10 is provided between the outer peripheral surface of inner door 3 and housing breaker 25 forming the inner peripheral surface of housing 2. With this configuration, when inner door 3 is closed, packing 10 is compressed between inner door 3 and housing 2 and brought into intimate contact with inner door 3 and housing 2, and inner space 22 is sealed off. Packing 10 is compressed in the width direction between the inner peripheral surface of housing 2 and inner door 3, and therefore the force pushing back inner door 3 forward that is generated at packing 10 at the time when the inner door is closed is small. Thus, by increasing packings 10 to increase sealing area, the sealing performance of inner door 3, and in turn, the cooling performance of ultra-low-temperature freezer 1, can be improved.
(2) In housing breaker 25 forming the inner peripheral surface of housing 2, breaker tilted surface part 25b that is tilted toward the center side (inside) of inner space 22 as it goes toward the rear side is formed. Thus, at the time when inner door 3 is closed, packing 10 can be easily put into the inner periphery side of breaker tilted surface part 25b and packing 10 can be compressed as described above.
(3) By attaching inner door 3 to housing 2 such that the distance between the inner peripheral surface of housing 2 and the outer peripheral surface of inner door 3 is uniform, the compression amount of packing 10 in the state where inner door 3 is closed can be uniformized over the whole circumference. Thus, this configuration can also improve the sealing performance of inner door 3, and in turn, the cooling performance of ultra-low-temperature freezer 1.
   Note that to uniformize the distance between the inner peripheral surface of housing 2 and the outer peripheral surface of inner door 3, the alignment between housing 2 and inner door 3 for mounting housing 2 and inner door 3 is important. Housing 2 and inner door 3 are mounted with hinge 6 (see FIG. 1). It is preferable that a bolt hole for insertion of a bolt for fixing hinge 6 to housing 2 and inner door 3 is an elongated hole so that the positions of housing 2 and inner door 3 can be adjusted.
(4) Since the sealing performance of inner door 3 is improved, leakage of cold air in inner space 22 to a gap between inner door 3 and outer door 4 is suppressed. Thus, generation of condensation and frost at the gap is suppressed.
(5) Unlike known techniques, packing 10 causes substantially no expansion in the width direction, and thus the sealing performance of inner door 3, and in turn, the cooling performance of ultra-low-temperature freezer 1, can be improved as described above while maintaining the width of ultra-low-temperature freezer 1 and the width and the volume of inner space 22.
(6) In the state where inner door 3 is closed, inner door 3 is pressed by compressed packing 10 from the outer circumference side, and thus the closed state is maintained. In this manner, it is possible to omit a mechanism, such as a latch, for maintaining the closed state of inner door 3. In addition, as described above, handle 40 provided in outer door 4 has a function of locking the closed state of outer door 4, and, when outer door 4 is in the closed state, each inner door 3 is closed by being pushed by outer door 4 to inner space 22. Thus, by locking outer door 4 in the closed state with handle 40, inner door 3 can also be locked in the closed state.
(7) With reference to FIG. 7, the advantageous effects of the embodiment of the present invention are further described. FIG. 7 is a schematic view for describing the advantageous effects of the embodiment of the present invention, and corresponds to FIG. 3. Note that door breaker 30 is omitted in FIG. 7.

At the time when inner door 3 is closed as illustrated by the white arrow, ends of air layer formation parts 10c, 10d and 10e and connecting parts 10f and 10g of packing 10 make sliding contact with housing breaker 25. As a result, in the state where inner door 3 is closed, air layer formation parts 10c, 10d and 10e and connecting parts 10f and 10g are set to a forward state in which their ends are located on the front side relative to base part 10a. Since inner space 22 has a negative pressure in ultra-low-temperature freezer 1, a force in the direction illustrated by the black arrow acts on packing 10 from the outside having a pressure higher than that of inner space 22.

However, since this force acts to push air layer formation parts 10c, 10d and 10e and connecting parts 10f and 10g to housing breaker 25, the adhesion between packing 10 and housing breaker 25 increases. That is, the sealing performance of packing 10 is naturally enhanced, and entry of external high-pressure warm air into inner space 22 can be reliably prevented.

Note that for convenience of illustration, the forward state of packing 10 is emphasized in FIG. 7, and the forward state of packing 10 is omitted in FIGS. 3, 5, and 6.

### 4. Other Configurations

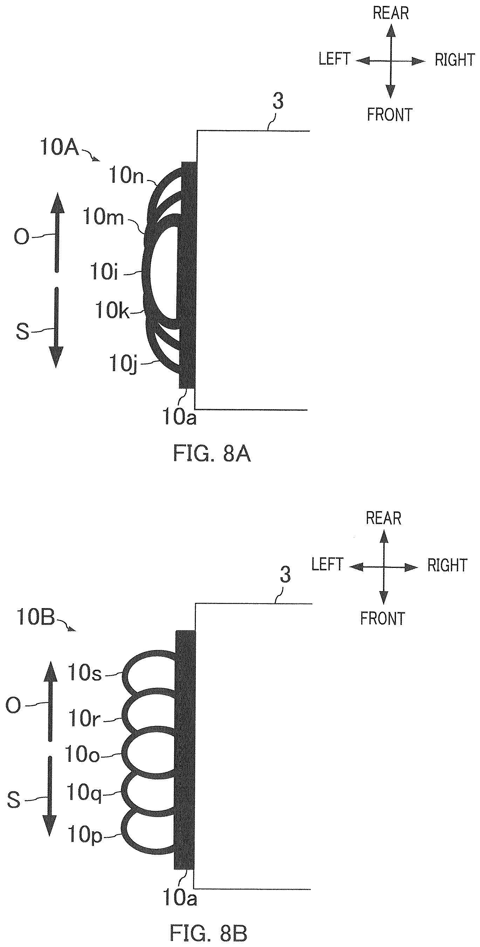

(1) While the sealing structure of the embodiment of the present invention is applied to inner door 3 in the above-mentioned embodiment, the sealing structure of the embodiment of the present invention may be applied to outer door 4.
(2) The packing serving as the sealing member is not limited to the configuration of packing 10, and various configurations may be used. For example, packings 10A and 10B illustrated in FIGS. 8A and 8B may be used. FIGS. 8A and 8B are schematic sectional views illustrating a configuration of a modification of the packing, and correspond to FIG. 3. FIGS. 8A and 8B illustrate a natural state of packings 10A and 10B where no compression force acts on it.

Packing 10A illustrated in FIG. 8A includes base part 10a, air layer formation part 10i, air layer formation part 10j and air layer formation part 10k disposed on the front side relative to air layer formation part 10i, and air layer formation part 10m and air layer formation part 10n disposed on the rear side relative to air layer formation part 10i. Each of air layer formation parts 10i to 10n is provided on the outside of base part 10a in the width direction.

Air layer formation part 10i has a substantially elliptical lateral cross-sectional shape elongated in the front-rear direction, and the front end and the rear end thereof are fixed to base part 10a.

Air layer formation part 10k has a substantially arc lateral cross-sectional shape, and includes a front end fixed to base part 10a and a rear end fixed to an outer part of air layer formation part 10i in the width direction. Air layer formation part 10j has a substantially arc lateral cross-sectional shape, and includes a front end fixed to base part 10a on the front side relative to air layer formation part 10k and a rear end fixed to an outer part of air layer formation part 10k in the width direction.

Air layer formation part 10m has a substantially arc lateral cross-sectional shape, and includes a front end fixed to an outer part of air layer formation part 10i in the width direction and a rear end fixed to base part 10a. Air layer formation part 10n has a substantially arc lateral cross-sectional shape, and includes a front end fixed to an outer part of air layer formation part 10m in the width direction and a rear end fixed to base part 10a on the rear side relative to air layer formation part 10m.

At the time when inner door 3 is closed, air layer formation parts 10i to 10n make sliding contact with the inner peripheral surface of housing 2 (omitted in FIG. 8A) and receive relatively forward force S. Conversely, at the time when inner door 3 is opened, air layer formation parts 10i to 10n receive relatively rearward force O. However, even upon reception of force S at the time when inner door 3 is closed, air layer formation parts 10n and 10m on the rear side retain them, whereas even upon reception of force O at the time when inner door 3 is opened, air layer formation parts 10j and 10k on the front side retain them. With this configuration, deformation of air layer formation parts 10i to 10n tilted forward or rearward can be suppressed. Accordingly, at the time when inner door 3 is opened and closed, increase in the resistance exerted on inner door 3 due to deformation of packing 10A can be limited, and the user can easily open and close inner door 3.

Packing 10B illustrated in FIG. 8B includes base part 10a, air layer formation part 10o, air layer formation part 10p and air layer formation part 10q disposed on the front side relative to air layer formation part 10o, and air layer formation part 10r and air layer formation part 10s disposed on the rear side relative to air layer formation part 10o. Each of air layer formation parts 10o to 10s is provided on the outside of base part 10a in the width direction.

Air layer formation part 10i has a substantially elliptical lateral cross-sectional shape elongated in the width direction, and includes a front end and a rear end fixed to base part 10a.

Air layer formation parts 10q and 10p have a substantially elliptical lateral cross-sectional shape elongated in the width direction. Air layer formation part 10q includes a front end fixed to base part 10a and a rear end fixed to air layer formation part 10o. Air layer formation part 10p includes a front end fixed to base part 10a on the front side relative to air layer formation part 10q and a rear end fixed to air layer formation part 10q.

Air layer formation parts 10r and 10s have a substantially elliptical lateral cross-sectional shape elongated in the width direction. Air layer formation part 10r includes a front end fixed to air layer formation part 10o and a rear end fixed to base part 10a. Air layer formation part 10s includes a front end fixed to air layer formation part 10r and a rear end fixed to base part 10a.

Air layer formation parts 10o to 10s receive forward force S at the time when inner door 3 is closed, and receives rearward force O at the time when inner door 3 is opened. However, even upon reception of such forces S and O, packing 10B less causes forward or rearward deformation in comparison with packing 10 illustrated in FIG. 4. Specifically, while packing 10 includes connecting parts 10f and 10g that are not supported by base part 10a, each of air layer formation parts 10o to 10s of packing 10B has the configuration in which at least one of the front end and the rear end is supported by base part 10a, and thus the forward or rearward deformation is suppressed. Accordingly, at the time when inner door 3 is opened and closed, increase in the resistance exerted on inner door 3 due to deformation of packing 10B can be limited, and the user can easily open and close inner door 3.

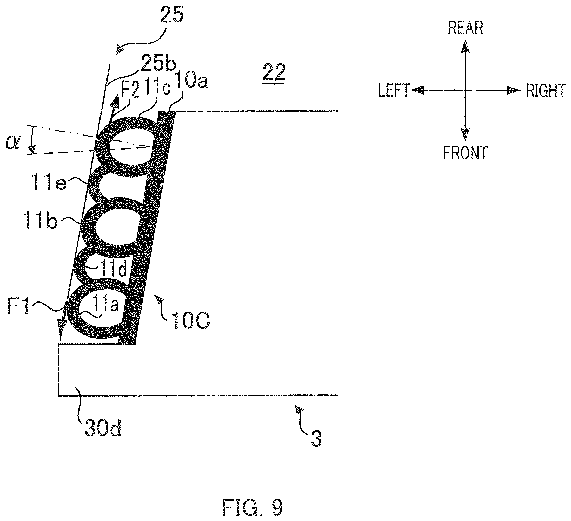

Modifications 1 to 3 of the sealing structure of the embodiment of the present invention are described below with reference to FIGS. 9 to 11. Points different from the above-described embodiments are mainly described below.

### Modification 1 of Sealing Structure

### 1. Sealing Structure

Modification 1 is described below with reference to FIG. 9. FIG. 9 is a schematic view for describing Modification 1 of the sealing structure according to the present invention, and corresponds to FIG. 7.

As in the above-described embodiment, in housing breaker 25, breaker tilted surface part 25b that is tilted inward in the width direction (toward the center side in inner space 22 in the upper, lower, left and right directions) as it goes toward the rear side (in the second direction) is formed.

In the above-described embodiment, the outer peripheral surface of inner door 3, i.e., the surface that faces breaker tilted surface part 25b when inner door 3 is in the closed state, is configured to extend in the front-rear direction. In the present modification, the outer peripheral surface of inner door 3 is formed as a tilted surface that is tilted inward in the width direction (toward the center side in inner space 22 in the upper, lower, left and right directions) as it goes toward the rear side (in the second direction). That is, the outer peripheral surface of inner door 3 is formed in parallel to breaker tilted surface part 25b. For example, breaker tilted surface part 25b and the outer peripheral surface of inner door 3 are tilted by 7.5 degrees with respect to the front-rear direction. Note that the inclination angle of breaker tilted surface part 25b and the outer peripheral surface of inner door 3 with respect to the front-rear direction is not limited to 7.5 degrees. In addition, breaker tilted surface part 25b and the outer peripheral surface of inner door 3 may not be parallel to each other.

In addition, while grip 30b is located on the front side of packing 10 in the above-described embodiment, packing cover part 30d is located on the front side of packing 10C in the present modification. The interior of packing cover part 30d is filled with a heat insulation material.

Packing 10C is fixed to the inner peripheral surface of inner door 3. Since the outer peripheral surface of inner door 3 is tilted as described above, packing 10C is also tilted with respect to the front-rear direction. Packing 10C includes base part 10a, air layer formation parts 11a, 11b and 11c (sliding contact parts), and connecting parts 11d and 11e (sliding contact parts). Each of air layer formation parts 11a, 11b and 11c and connecting parts 11d and 11e correspond to air layer formation parts 10c, 10d and 10e and connecting parts 10f and 10g, respectively, of the above-described embodiment.

Air layer formation parts 11a to 11c and connecting parts 11d and 11e are disposed side by side in the front-rear direction along base part 10a, and make sliding contact with breaker tilted surface part 25b at the time when inner door 3 is closed. In addition, the heights of the ends (widths) of air layer formation parts 11a to 11c and connecting parts 11d and 11e are the same. The height of the end (width) is the length from base part 10a to each end portion, on the side opposite to base part 10a, of the air layer formation part or the connecting part. The end portion is hereinafter referred to as a housing side end portion of packing 10C.

When inner door 3 is in the closed state, air layer formation parts 11a, 11b and 11c and connecting parts 11d and 11e are in contact with breaker tilted surface part 25b as illustrated in FIG. 9. At this time, air layer formation parts 11a, 11b and 11c and connecting parts 11d and 11e extend in the direction tilted by angle α with respect to the normal (the chain double-dashed line of FIG. 9) to the top surface of base part 10a. Note that when inner door 3 is in the opened state, air layer formation parts 11a, 11b and 11c and connecting parts 11d and 11e extend in the direction of the normal to the top surface of base part 10a.

In the present modification, breaker tilted surface part 25b and the outer peripheral surface of inner door 3 are tilted with respect to the front-rear direction. Accordingly, at the time when inner door 3 is closed, packing 10C is compressed not only in the horizontal direction, but also in the front-rear direction. As a result, after inner door 3 is closed, packing 10C pushes inner door 3 forward. To maintain the closed state of inner door 3 against such a force, it is preferable to provide a lock mechanism that fixes inner door 3 when inner door 3 is closed in the present modification.

### 2. Advantageous Effects

(1) Breaker tilted surface part 25b and the outer peripheral surface of inner door 3 are formed as surfaces tilted inward in the width direction as they go toward the rear side. As a result, at the time when inner door 3 is closed, packing 10C moves along a path such that the resilience from breaker tilted surface part 25b is less received. Thus, at the time when inner door 3 is closed, packing 10C is easily put into the inner side of breaker tilted surface part 25b in the width direction. That is, inner door 3 can be closed with a relatively small force.
(2) Since breaker tilted surface part 25b and the outer peripheral surface of inner door 3 are formed as surfaces tilted inward in the width direction as they go toward the rear side, the force exerted on packing 10C from breaker tilted surface part 25b in the state where inner door 3 is completely closed is uniform regardless of the position in the front-rear direction. Thus, the force from breaker tilted surface part 25b is more uniformly exerted on air layer formation parts 11a to 11c and connecting parts 11d and 11e, and the sealing property of inner door 3 is improved.
(3) Since packing 10C is fixed to the outer peripheral surface of inner door 3, force F1 acts on the housing side end portion of packing 10C at the time when inner door 3 is completely closed. As a result, when inner door 3 is completely closed, air layer formation parts 11a to 11c and connecting parts 11d and 11e are tilted by angle α with respect to the direction perpendicular to base part 10a. Note that, naturally, although force F1 is illustrated only at the end portion of air layer formation part 11a in FIG. 9, force F1 acts also on the housing side end portions of air layer formation parts 11a and 11b and connecting parts 11d and 11e.
   In addition, since the interior has a negative pressure, pulling force F2 toward the rear side (inner space 22 side) acts on air layer formation parts 11a to 11c and connecting parts 11d and 11e. Force F2 acts to set air layer formation parts 11a to 11c and connecting parts 11d and 11e in the direction perpendicular to base part 10a. This increases the adhesion between air layer formation parts 11a to 11c and connecting parts 11d and 11e and breaker tilted surface part 25b. As a result, the sealing performance of inner door 3 is improved. Note that, naturally, in FIG. 9, force F2 acting on air layer formation part 11c acts on air layer formation part 11a, 11b and connecting parts 11d and 11e directly through the actual portion of packing 10C or indirectly through the hollow part of packing 10C.
(4) Packing cover part 30d whose interior is filled with a heat insulation material is located on the front side of packing 10C. Thus, the heat insulating effect in a region around packing 10C can be increased.

### Modification 2 of Sealing Structure

### 1. Sealing Structure

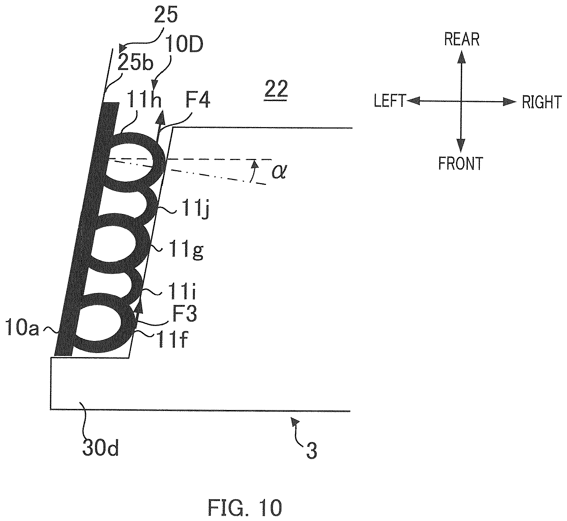

Modification 2 is described below with reference to FIG. 10. FIG. 10 is a schematic view for describing Modification 2 of the sealing structure according to the present invention, and corresponds to FIG. 7. In Modification 1, packing 10C is fixed to the outer peripheral surface of inner door 3, whereas in Modification 2, packing 10D is fixed to the inner peripheral surface of housing breaker 25, i.e., breaker tilted surface part 25b. Other configurations of the sealing structure of Modification 2 are similar to those of Modification 1.

Note that air layer formation parts 11f, 11g and 11h and connecting parts 11i and 11j of packing 10D correspond to air layer formation parts 10c, 10d and 10e and connecting parts 10f and 10g, respectively, of the above-described embodiment.

### 2. Advantageous Effects

(1) As in Modification 1, breaker tilted surface part 25b and the outer peripheral surface of inner door 3 are formed as surfaces tilted inward in the width direction as they go toward the rear side. Thus, effects similar to the effects described in (1) and (2) of Modification 1 can be achieved.
(2) Since packing 10D is fixed to breaker tilted surface part 25b, force F3 acts on the end surface of packing 10D on the inner door side at the time when inner door 3 is completely closed. When inner door 3 is completely closed under force F3, air layer formation parts 11f to 11h and connecting parts 11i and 11j extend in the direction tilted with respect to the normal to base part 10a by angle α. Note that, naturally, although force F3 is illustrated only at the end portion of air layer formation part 11f in FIG. 10, force F3 acts also on end portions of air layer formation parts 11g and 11h and connecting parts 11i and 11j on the inner door side.

In addition, since the interior has a negative pressure, a rearward (inner space 22 side) pulling force F4 acts on air layer formation parts 11f to 11h and connecting parts 11i and 11j. Force F4 acts to increase inclination angle α of air layer formation parts 11f to 11h and connecting parts 11i and 11j. As a result, when the negative pressure level of the interior increases and the pressure difference between the interior and the exterior exceeds a predetermined threshold value, the deformation amount of packing 10D increases, and adhesion of packing 10D to breaker tilted surface part 25b is slightly reduced.

Then, a small amount of external air enters the interior, and the pressure difference between the exterior and the interior becomes equal to or smaller than the above-described predetermined threshold value. As a result, the deformation amount of packing 10D decreases, and the adhesion of packing 10D to breaker tilted surface part 25b again increases.

That is, in the present modification, packing 10D functions also as a negative pressure releasing device. Thus, inner door 3 can be more easily opened.

(3) As in Modification 1, packing cover part 30d located on the front side of packing 10D is filled with a heat insulation material, and therefore effects similar to the effects described in (4) of Modification 1 can be achieved.

### Modification 3 of Sealing Structure

### 1. Sealing Structure

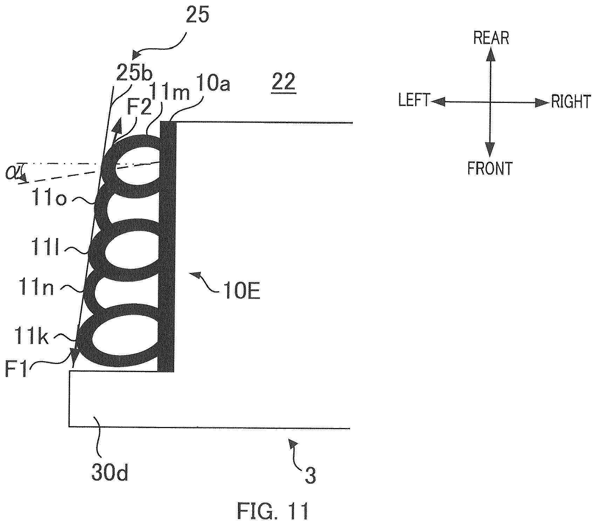

Modification 3 is described below with reference to FIG. 11. FIG. 11 is a schematic view for describing Modification 3 of the sealing structure according to the present invention, and corresponds to FIG. 7. In Modification 1, the outer peripheral surface of inner door 3 is tilted with respect to the front-rear direction. In contrast, in Modification 3, the outer peripheral surface of inner door 3 where packing 10E is fixed is parallel to the front-rear direction.

In addition, in Modification 1, air layer formation parts 11a, 11b and 11c and connecting parts 11d and 11e of packing 10C have the same width. In contrast, in Modification 3, the widths of air layer formation parts 11k, 11l and 11m, and connecting parts 11n and 11o are set such that the closer the part to inner space 22, the smaller the width. In the example illustrated in FIG. 11, the widths increase in the order of air layer formation part 11m, connecting part 11o, air layer formation part 111, connecting part 11n, and air layer formation part 11k. Other configurations of the sealing structure are the same as those of Modification 1.

### 2. Advantageous Effects

According to the present modification, effects similar to those of the effects of Modification 1 can be achieved.

Note that in Modification 3, packing 10E is fixed to the outer peripheral surface of inner door 3. In other words, air layer formation parts 11k, 111 and 11m and connecting parts 11n and 11o are disposed side by side along the outer peripheral surface of inner door 3. Alternatively, packing 10E may be fixed to the inner peripheral surface of housing breaker 25 (breaker tilted surface part 25b). In other words, air layer formation parts 11k, 11l and 11m and connecting parts 11n and 11o may be disposed side by side along the inner peripheral surface of housing breaker 25 (breaker tilted surface part 25b). In this case, effects similar to the effects of Modification 2 can be achieved.

The disclosure of Japanese Patent Application No. 2018-100874 filed on May 25, 2018 including the specification, claims, drawings and abstract is incorporated herein by reference in its entirety.

### Industrial Applicability

The present invention can provide a cooling apparatus with an improved sealing property of the inner space, and in turn, an improved cooling performance. Therefore, very broad industrial applicability can be achieved.

### Reference Signs List

1 Ultra-low-temperature freezer
2 Housing
20 Inner space
21 Partition wall
22 Inner space
22a Opening
23 Partition wall
25 Housing breaker
25a Rear part
25b Breaker tilted surface part
3 Inner door
30 Door breaker
30a Rear part
30b Grip
30c Recess
30d Packing cover part
4 Outer door
40 Handle
5 Machine chamber
6, 7 Hinge
10, 10A, 10B, 10C, 10D, 10E Packing (sealing member) of inner door 3
10a Base part
10b Protrusion
10c, 10d, 10e, 11a, 11b, 11c, 11f, 11g, 11h, 11k, 111, 11m Air layer formation part (Sliding contact part)
10f, 10g, 11d, 11e, 11i, 11j, 11n, 11o Connecting part (Sliding contact part)
10h Rib
10i to 10s Air layer formation part
15 Packing of outer door 4
CLi Rotation center line of inner door 3
CLo Rotation center line of outer door 4

## Claims

1. A sealing structure of a cooling apparatus, comprising:
a housing including an inner space that is open to a first direction;
a door configured to enter the inner space of the housing from a side of the first direction with respect to the housing; and
a sealing member configured to be brought into a compression state between the door and an inner peripheral surface of the housing in a state where the door is located in the inner space, the inner peripheral surface facing the inner space.

2. The sealing structure of the cooling apparatus according to claim 1,
wherein a first end portion of the door in a width direction is swingably attached to the housing;
wherein the sealing member is provided at a second end portion of the door in the width direction; and
wherein the inner peripheral surface of the housing is formed as a tilted surface tilted toward a center side of the inner space as it goes in a second direction opposite to the first direction.

3. The sealing structure of the cooling apparatus according to claim 1 or 2,
wherein the sealing member includes:
a base part fixed to the door; and
a plurality of sliding contact parts disposed side by side in the first direction and a second direction opposite to the first direction in a state where the door is closed, the plurality of sliding contact parts being configured to make sliding contact with the inner peripheral surface at a time when the door is closed.

4. The sealing structure of the cooling apparatus according to claim 1 or 2,
wherein the inner peripheral surface and an outer peripheral surface of the door are formed as tilted surfaces tilted toward a center side of the inner space as they go in a second direction opposite to the first direction; and
wherein the outer peripheral surface is a surface that faces the inner peripheral surface in a state where the door is closed.

5. The sealing structure of the cooling apparatus according to claim 1 or 2,
wherein the sealing member includes:
a base part fixed to the inner peripheral surface or an outer peripheral surface of the door; and
a plurality of sliding contact parts disposed side by side along the inner peripheral surface or the outer peripheral surface in a state where the door is closed, the plurality of sliding contact parts being configured to make sliding contact with the outer peripheral surface or the inner peripheral surface at a time when the door is closed,
wherein lengths of the plurality of sliding contact parts from the base part to an end portion opposite to the base part in the sliding contact part are set such that the closer to the inner space, the smaller the length,
wherein the inner peripheral surface is formed as a tilted surface tilted toward a center side of the inner space as it goes in a second direction opposite to the first direction, and
wherein the outer peripheral surface is a surface that is parallel to the first direction and the second direction, and faces the inner peripheral surface.

6. A cooling apparatus comprising the sealing structure of the cooling apparatus according to any one of claims 1 to 5.
